# EUROPÄISCHE PATENTSCHRIFT

(11) **EP 2 525 998 B1**
(45) Veröffentlichungstag und Bekanntmachung des Hinweises auf die Patenterteilung: **11.09.2013**
(21) Anmeldenummer: 10808980.6
(22) Anmeldetag: 21.12.2010
(51) Int. Cl.: B60R 11/02, B62J 11/00, B62J 99/00

(54) **HALTESYSTEM ZUR BEFESTIGUNG EINES ELEKTRONISCHEN ZUSATZGERÄTES**
HOLDING SYSTEM FOR MOUNTING AN ELECTRONIC AUXILIARY DEVICE
DISPOSITIF DE SUPPORT POUR ACCESSOIRE ELECTRONIQUE

(30) Priorität: 20.01.2010 DE 102010005270
(43) Veröffentlichungstag der Anmeldung: 28.11.2012
(73) Patentinhaber: Schanz, Jochen, 78078 Niedereschach (DE); Schwarz, Herbert, 78078 Niedereschach (DE)
(72) Erfinder: Schanz, Jochen, 78078 Niedereschach (DE); Schwarz, Herbert, 78078 Niedereschach (DE)
(74) Vertreter: Zimmermann, Günter
(86) Internationale Anmeldenummer: PCT/DE2010/001496
(87) Internationale Veröffentlichungsnummer: WO 2011/088813

(56) Entgegenhaltungen:
- DE-A1- 19 719 512
- DE-U1- 20 117 127
- DE-U1-202007 009 059
- FR-A1- 2 917 353
- US-A1- 2005 156 088

## Beschreibung

Die Erfindung bezieht sich auf ein Haltesystem zur Befestigung eines elektronischen Zusatzgerätes mit den Merkmalen des Oberbegriffs des Anspruchs 1.

Ein derartiges Haltesystem ist durch die FR 2 917 353 A1 bekannt. Dieses Haltesystem weist eine Kurvensteuerung mit einer Kurvenscheibe und einen Betätigungshebel auf. Durch Betätigen des Hebels bewirkt die Kurvenscheibe ein Auseinanderdrücken der Fixierungselemente für das elektronische Zusatzgerät und das elastische Element bewirkt ein Andrücken des Zusatzgerätes.

Ein weiteres Haltesystem ist durch die DE 197 19 512 A1 bekannt, wobei die Verschiebung von Spannbacken über ein Zahnrad und Zahnstangen sowie ein Schwenkelement erfolgen, welches durch das Niederdrücken einer Auflagewippe für das elektronische Zusatzgerät betätigt wird.

Ein weiteres in der US 2005/156088 A1 beschriebene Haltesystem ist zangenartig ausgebildet. Durch Betätigen von Handgriffen werden Fixierungselemente für das elektronische Zusatzgerät auf- und zugedrückt.

Ein weiteres Haltesystem ist durch die EP 1 438 225 bekannt. Das bekannte Haltesystem ist zur Aufnahme und Verriegelung von relativ großen Zusatzgeräten vorgesehen. Da die Zusatzgeräte wie Navigationsgeräte oder Smartphones immer kleiner und flacher werden, ist das bekannte Haltesystem nachteiligerweise für derartige Zusatzgeräte nicht mehr geeignet.

Die Aufgabe der Erfindung wird somit darin gesehen, das Haltesystem der eingangs genannten Art derart weiterzuentwickeln, dass auch flache Zusatzgeräte sicher gehalten werden, ohne dass die Sicht auf das Gerät oder die Bedienung des Geräts beeinträchtigt wird.

Zur Lösung dieser Aufgabe wird erfindungsgemäß vorgeschlagen, dass das Haltesystem gemäß dem Oberbegriff des Anspruchs 1 entsprechend dem kennzeichnenden Teil dieses Anspruchs ausgebildet ist.

Durch die hebeigesteuerte Kurvensteuerung mittels der Kurvenscheibe wird der Umfang des Halterungskörpers in Offenstellung derart groß, dass das Zusatzgerät problemlos eingesetzt werden kann. In Schließstellung presst sich dann der für die Aufnahme des Zusatzgerätes wirksame Umfang des Halterungskörpers derart gegen das Zusatzgerät, dass auch flache und kleine Zusatzgeräte sicher in dem erfindungsgemäßen Haltesystem gehalten werden, ohne dass die Sicht oder die Bedienung des Zusatzgerätes beeinträchtigt wird. Der Halterungskörper weist eine Grundplatte auf, wobei an der Grundplatte der Betätigungshebel und die mit dem Betätigungshebel in Eingriff stehende Kurvenscheibe schwenkbar gelagert sind und durch mindestens ein elastisches Element unter Spannung gehaltene Fixierungselemente für das Zusatzgerät verschiebbar angeordnet sind und ein Verschwenken des Betätigungshebels die Fixierungselemente mittels der Kurvenscheibe in die Offenstellung oder in die Schließstellung bringt. Die Fixierungselemente sind unter Spannung gehalten und pressen sich in Schließstellung gegen das Zusatzgerät, so dass dieses sicher gehalten wird. Es können unterschiedlich viele Fixierungselemente vorgesehen sein, welche gegen die Kanten oder Ecken des Zusatzgerätes drücken. Üblicherweise werden vier Fixierungselemente für die vier Ecken des Zusatzgerätes verwendet.

Damit das Zusatzgerät auch bei einem heftigen Schlag oder Stoß nicht aus dem Haltesystem herausrutschen kann, sieht eine weitere Ausführungsform der Erfindung vor, dass jedes Fixierungselement an seiner Innenseite eine zur Mitte des Halterungskörpers hin offene Nut zum Einsetzen einer Ecke oder einer Kante des Zusatzgerätes aufweist. Dabei hat die Nut eine an die Ecke des Zusatzgerätes angepasste Form, so dass bei abgerundeten Ecken die Nut entsprechend bogenförmig ausgebildet ist. Um die Fixierungselemente verschiebbar an der Grundplatte anzuordnen, sieht eine weitere Ausführungsform der Erfindung vor, dass jedes Fixierungselement einen Gleitschuh aufweist, welcher in einer Langlochführung der Grundplatte verschiebbar ist. Es sind auch andere Führungen denkbar, welche geeignet sind, dass durch die verschiebbaren Fixierungselemente der Umfang des Halterungskörpers in der Offenstellung größer ist als in der Schließstellung.

Um das mindestens eine elastische Element sicher an den Fixierungselementen zu halten, sieht eine weitere Ausgestaltung der Erfindung vor, dass jedes Fixierungselement an seiner Außenseite mindestens eine Nut zum Einsetzen des mindestens einen elastischen Elementes aufweist. Das elastische Element ist dabei zweckmäßigerweise ein Gummiband oder ein Gummiseil, wobei auch alle anderen elastischen Elemente geeignet sind, welche die Fixierungselemente in Schließstellung an das Zusatzgerät anpressen.

Die Kurvenscheibe und die damit verbundene Kurvensteuerung der Fixierungselemente können in allen Bereichen des Halterungskörpers angeordnet sein. Vorteilhafterweise ist die Kurvenscheibe an der Unterseite der Grundplatte angeordnet und weist eine Führungsöffnung auf, in welche ein am Betätigungshebel angeordneter Stift eingreift. Um beim Verschwenken des Betätigungshebels eine möglichst unmittelbare Kraftübertragung auf die Kurvenscheibe zu haben, sieht eine weitere Ausführungsform der Erfindung vor, dass die Kurvenscheibe im Bereich der Führungsöffnung zwei seitliche Anschläge für den Stift aufweist, wobei der Stift an dem Betätigungshebel derart angeordnet ist, dass er eine teilkreisförmige Bewegung beim Verschwenken des Betätigungshebels ausführt. Diese Anordnung ermöglicht es zusätzlich, dass der Betätigungshebel bei Beschädigung zusammen mit dem Stift in einfacher Weise ausgetauscht werden kann, da das Herausnehmen und Einsetzen des Stiftes in die Führungsöffnung sehr einfach ist.

Eine weitere Ausgestaltung der Erfindung sieht vor, dass an der Grundplatte eine Befestigungseinrichtung oder eine Vibrationsentkopplungseinrichtung und eine Befestigungseinrichtung angeordnet sind. Durch die Befestigungseinrichtung wird der Halterungskörper an dem Motorrad befestigt und durch die Vibrationsentkopplungseinrichtung wird das Zusatzgerät insbesondere bei einer Fahrt durch Schlaglöcher vor Beschädigung geschützt. Für den Fahrer ist es manchmal von großer Bedeutung, dass das auf dem Zusatzgerät angezeigte Bild entweder im Hochformat oder im Querformat dargestellt wird. Eine weitere Ausführungsform der Erfindung sieht deshalb vor, dass zwischen der Grundplatte und der Befestigungseinrichtung oder der Vibrationsentkopplungseinrichtung noch eine Schwenkeinrichtung zum Verschwenken des Halterungskörpers um jeweils 90° derart vorgesehen ist, dass das Zusatzgerät entweder im Hochformat oder im Querformat angeordnet ist.

Die Erfindung wird nachstehend anhand der Zeichnung näher erläutert. Die Zeichnung zeigt ein Ausführungsbeispiel der Erfindung. Hierbei stellen dar:

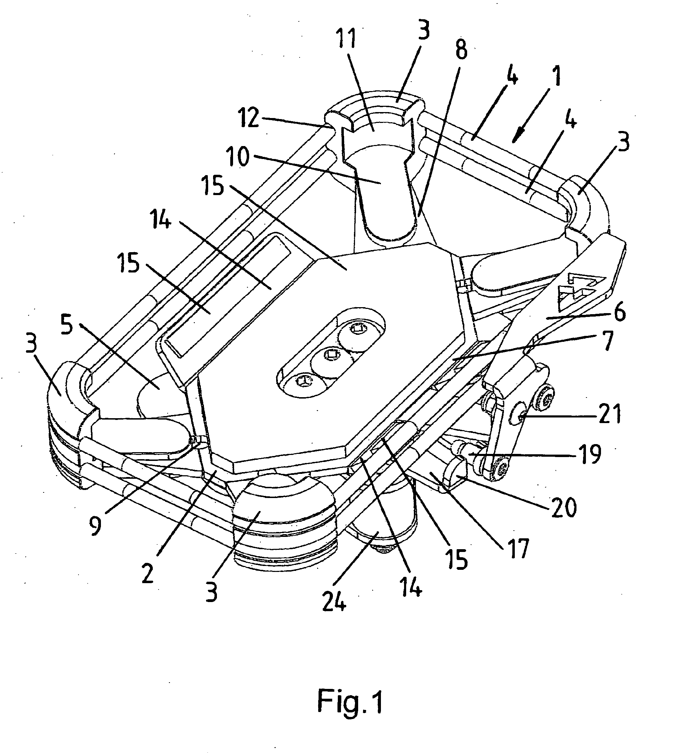

Fig. 1: eine perspektivische Ansicht in einer Schließstellung ohne Zusatzgerät,

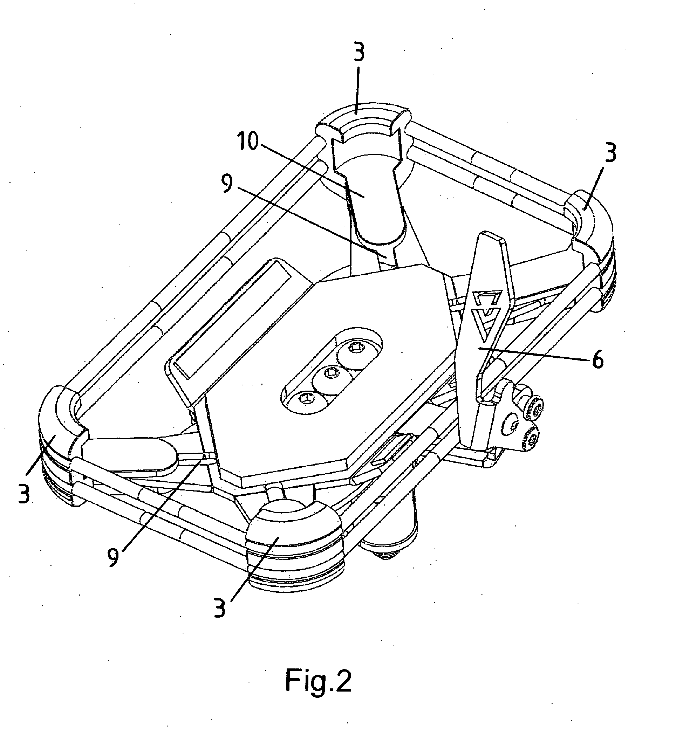

Fig. 2: eine perspektivische Ansicht in einer Offenstellung ohne Zusatzgerät,

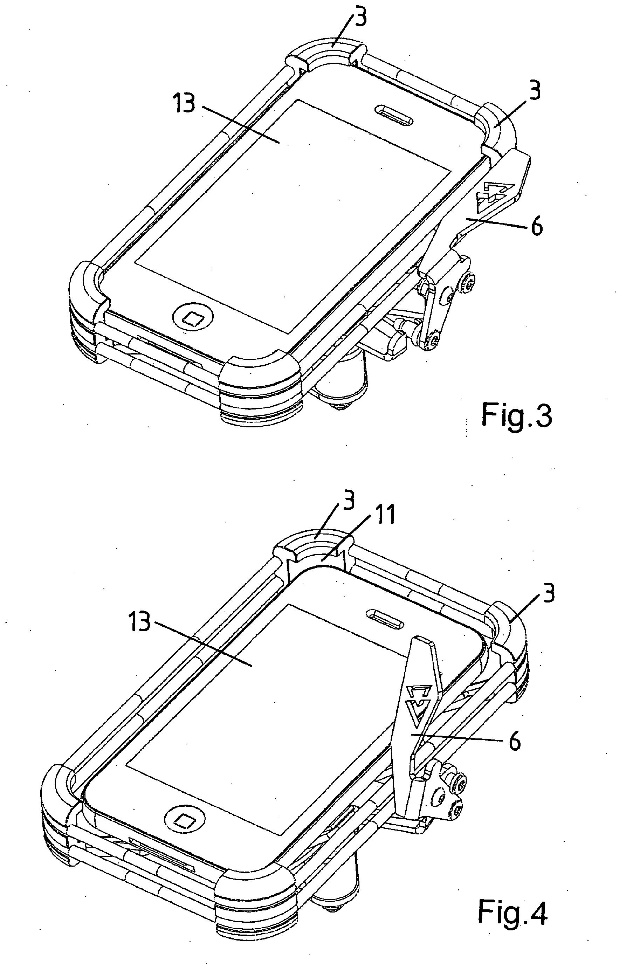

Fig. 3: eine perspektivische Ansicht in einer Schließstellung mit Zusatzgerät,
Fig. 4: eine perspektivische Ansicht in einer Offenstellung mit Zusatzgerät,

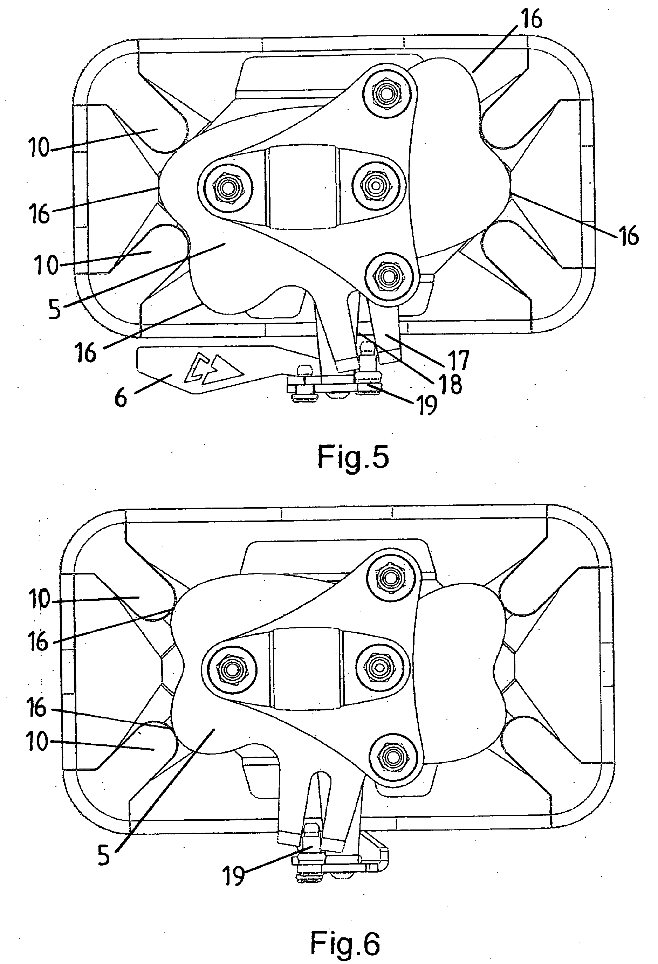

Fig. 5: eine Ansicht von unten in einer Schließstellung,
Fig. 6: eine Ansicht von unten in einer Offenstellung,

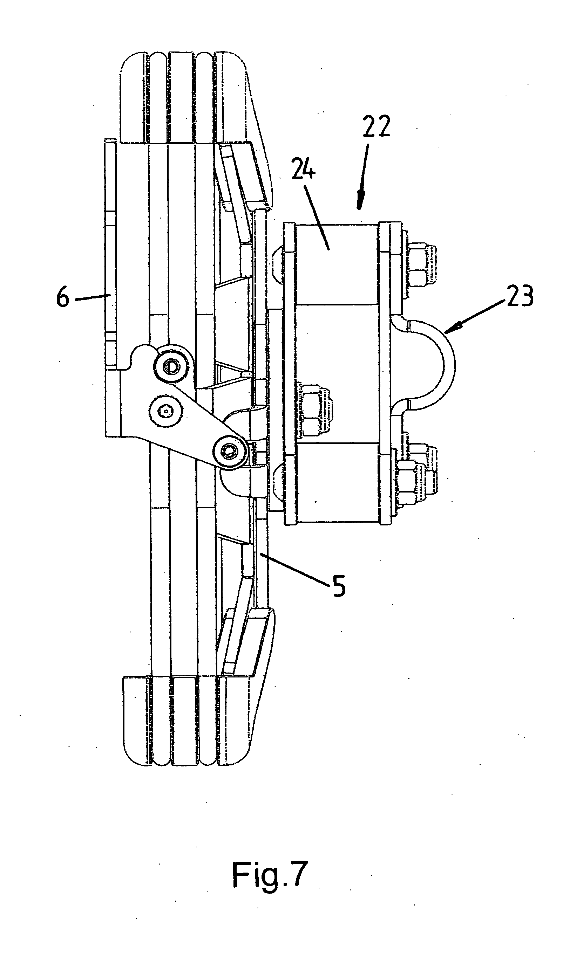

Fig. 7: eine Seitenansicht,

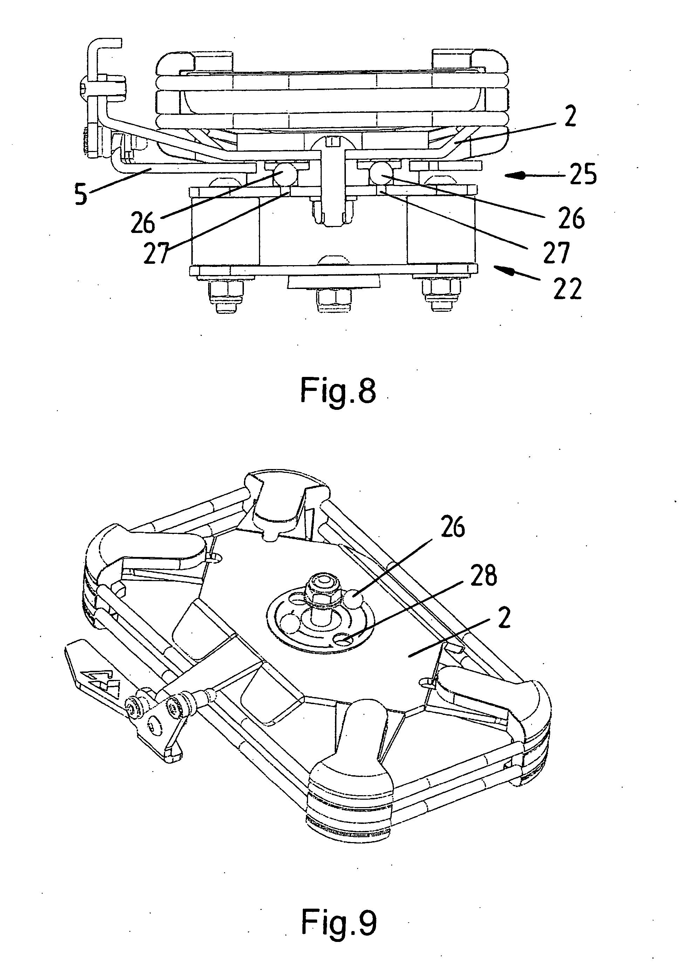

Fig.8: eine Seitenansicht mit Schwenkeinrichtung und
Fig.9: eine Ansicht von unten auf die Grundplatte.

Das Haltesystem weist einen Halterungskörper 1 mit einer Grundplatte 2, vier Fixierungselementen 3 und zwei elastischen Elementen 4 auf. An der Unterseite der Grundplatte 2 ist eine Kurvenscheibe 5 schwenkbar gelagert und seitlich an der Grundplatte 2 ist ein Betätigungshebel 6 ebenfalls schwenkbar gelagert. Die Grundplatte 2 weist in ihrem zentralen Bereich eine längliche sechseckige Form 7 auf, welche aus einer länglichen Rechteckform und zwei Dreieckformen mit gleichschenkligen Dreiecken einstückig ausgebildet ist. An jedem Schenkel der Dreieckformen erstreckt sich ein Steg 8 diagonal nach außen, wobei jeder Steg 8 eine Langlochführung 9 aufweist, welche in der Mitte des Steges 8 angeordnet ist und ebenfalls diagonal nach außen verläuft. Jeder Steg 8 ist einstückig mit der Sechseckform ausgebildet. In die Langlochführung 9 ist ein Gleitschuh 10 eingesetzt, welcher zwei einstückig ausgebildete Teile aufweist, wobei ein erstes Teil oberhalb des Steges 8 und ein zweites Teil unterhalb des Steges 8 angeordnet sind. Das erste Teil und das zweite Teil sind über ein in der Zeichnung nicht sichtbares Führungselement verbunden, welches in der Langlochführung 9 verläuft. Der Gleitschuh 10 ist Teil des Fixierungselementes 3 und folglich einstückig mit diesem ausgebildet. Jedes Fixierungselement 3 zusammen mit dem Gleitschuh 10 besteht aus einem harten Kunststoff mit guten Gleiteigenschaften. Jedes Fixierungselement 3 hat die Form eines Viertelkreissegmentes und weist an seiner Innenseite zur Mitte des Halterungskörpers 1 hin eine offene Nut 11 zum Einsetzen einer Ecke oder einer Kante des Zusatzgerätes 13 auf. An der Außenseite jedes Fixierelementes 3 sind zwei weitere Nuten 12 vorgesehen, welche parallel zueinander verlaufen und in welche jeweils ein elastisches Element 4 eingesetzt ist. Da die Nuten 12 im Querschnitt kreisförmig ausgebildet sind, sind auch die entsprechenden elastischen Elemente 4 im Querschnitt kreisförmig ausgebildet und verlaufen als Endlosschlaufen über die Außenseiten der vier Fixierungselemente 3. Beide elastischen Elemente 4 verlaufen parallel zueinander. Für einen sicheren seitlichen Halt des Zusatzgerätes 13 sind an den Seitenrändern der Rechteckform der Grundplatte 2 noch schräg nach oben verlaufende Seitenwände 14 vorgesehen. Jede Seitenwand 14 ist an ihrer Oberseite mit einem Dämpfungselement 15 versehen. Ebenso weist die Sechseckform der Grundplatte 2 ein Dämpfungselement 15 auf. Die Kurvenscheibe 5 weist an jeder ihrer Stirnseiten zwei Nocken 16 zur Steuerung der Fixierungselemente 3 auf und steht mit dem äußeren Ende jedes Gleitschuhs 10 in Kontakt. Da sich die Kurvenscheibe 5 an der Unterseite der Grundplatte 2 befindet, steht sie entsprechend mit dem zweiten Teil jedes Gleitschuhs 10 in Kontakt, welcher unterhalb des Steges 8 angeordnet ist. Im Seitenbereich weist die Kurvenscheibe 5 eine sich nach außen erstreckende Verlängerung 17 mit einer nach außen hin offenen und schlitzartig ausgebildeten Führungsöffnung 18 auf. In die Führungsöffnung 18 ragt ein Stift 19 des Betätigungshebels 6 hinein. Am äußeren Ende der Führungsöffnung 18 sind zwei seitliche Anschläge 20 für den Stift 19 vorgesehen. Die Anschläge 20 sind einstückig mit der Verlängerung 17 ausgebildet und um 90° gegenüber der Verlängerung 17 nach oben abgebogen. Da der Stift 19 außerhalb des Drehpunktes 21 des Betätigungshebels 6 angeordnet ist, führt er bei Verschwenken des Betätigungshebels 6 eine teilkreisförmige Bewegung aus, so dass der Stift 19 zur Anlage an einem Anschlag 20 kommt und somit die Kurvenscheibe 5 in die entsprechende Richtung verschwenkt. Da die Kurvenscheibe 5 in Kontakt mit den Gleitschuhen 10 steht, werden die Gleitschuhe 10 nach außen gedrückt, sobald die Nocken 16 der Kurvenscheibe 5 in Kontakt mit den Gleitschuhen 10 kommen. Dadurch werden die durch die elastischen Elemente 4 unter Spannung gehaltenen Fixierungselemente 3 diagonal nach außen gedrückt, so dass insgesamt der Umfang des Halterungskörpers 1 so groß wird, dass ein Zusatzgerät 13 problemlos eingesetzt werden kann. Wird der Betätigungshebel 6 in seine Schließstellung wieder zurückgeschwenkt, dann steuert die Kurvenscheibe 5 aufgrund der zwischen den Nocken 16 angeordneten Vertiefungen die Gleitschuhe 10 und damit die Fixierungselemente 3 derart nach innen, dass die Nut 11 jedes Fixierungselementes 3 sich aufgrund des elastischen Elementes 4 an die Ecken des Zusatzgerätes 13 anpresst und damit das Zusatzgerät 13 sicher gehalten wird. Mit diesem erfindungsgemäßen Haltesystem können insbesondere flache Zusatzgeräte wie Navigationsgeräte, Smartphones oder MP3-Player sicher gehalten werden. Da die Oberseite des Zusatzgerätes 13 lediglich durch die Außenränder der Nut 11 abgedeckt ist, wird die Sicht auf das Zusatzgerät 13 und die Bedienung des Zusatzgerätes 13 nicht beeinträchtigt.

Unterhalb der Kurvenscheibe 5 befinden sich noch eine Vibrationsentkopplungseinrichtung 22 und eine Befestigungseinrichtung 23, um das Haltesystem beispielsweise an einem Motorrad zu befestigen. Die Vibrationsentkopplungseinrichtung 22 weist mehrere Gummipuffer 24 auf, um die Schläge beim Fahren zu dämpfen und insgesamt somit das Haltesystem vor Schlag oder Stoß zu schützen. Damit der Halterungskörper 1 und damit das Zusatzgerät 13 je nach Bedarf in eine Hochformatposition oder in eine Querformatposition geschwenkt werden kann, ist zwischen der Grundplatte 2 und der Vibrationsentkopplungseinrichtung 22 noch eine Schwenkeinrichtung 25 zum Verschwenken des Halterungskörper 1 um jeweils 90° vorgesehen. Die Schwenkeinrichtung 25 funktioniert über eine Drehverrastung und weist zwei federbeaufschlagte Kugeln 26 auf, welche an der Oberseite der Vibrationsentkopplungseinrichtung 22 in entsprechenden vier Löchern 27 und grundplattenseitig in gegenüberliegenden Löchern 28 sitzen können. Mit der Schwenkeinrichtung 25 können vier Positionen um jeweils 90° versetzt eingestellt werden.

## Patentansprüche

1. Haltesystem zur Befestigung eines elektronischen Zusatzgerätes mit einem Halterungskörper (1), wobei über eine von einem Betätigungshebel (6) gesteuerte Kurvensteuerung mit einer Kurvenscheibe (5) der für die Aufnahme des Zusatzgerätes wirksame Umfang des Halterungskörpers (1) in einer Offenstellung größer einstellbar ist als in einer Schließstellung und der Halterungskörper (1) eine Grundplatte (2) aufweist, wobei an der Grundplatte (2) der Betätigungshebel (6) und die mit dem Betätigungshebel (6) in Eingriff stehende Kurvenscheibe (5) schwenkbar gelagert sind und durch mindestens ein elastisches Element (4) unter Spannung gehaltene Fixierungselemente (3) für das Zusatzgerät (13) verschiebbar angeordnet sind und ein Verschwenken des Betätigungshebels (6) die Fixierungselemente (3) mittels der Kurvenscheibe (5) in die Offenstellung oder in die Schließstellung bringt, **dadurch gekennzeichnet,**
**dass** jedes Fixierungselement (3) an seiner Außenseite mindestens eine Nut (12) zum Einsetzen des mindestens einen elastischen Elementes (4) aufweist.

2. Hattesystern nach Anspruch 1,
**dadurch gekennzeichnet,**
**dass** jedes Fixierungselement (3) an seiner Innenseite eine zur Mitte des Halterungskörpers (1) hin offene Nut (11) zum Einsetzen einer Ecke oder einer Kante des Zusatzgerätes (13) aufweist.

3. Haltesystem nach einem der vorhergehenden Ansprüche,
**dadurch gekennzeichnet,**
**dass** jedes Fixierungselement (3) einen Gleitschuh (10) aufweist, welcher in einer Langlochführung (9) der Grundplatte (2) verschiebbar ist.

4. Haltesystem nach einem der vorhergehenden Ansprüche,
**dadurch gekennzeichnet,**
**dass** das mindestens eine elastische Element (4) ein Gummiseil ist.

5. Haltesystem nach einem der vorhergehenden Ansprüche,
**dadurch gekennzeichnet,**
**dass** die Kurvenscheibe (5) an der Unterseite der Grundplatte (2) angeordnet ist und eine Führungsöffnung (18) aufweist, in welche ein am Betätigungshebel (6) angeordneter Stift (19) eingreift.

6. Haltesystem nach Anspruch 5,
**dadurch gekennzeichnet,**
**dass** die Kurvenscheibe (5) im Bereich der Führungsöffnung (18) zwei seitliche Anschläge (20) für den Stift (19) aufweist, wobei der Stift (19) an dem Betätigungshebel (6) derart angeordnet ist, dass er eine teilkreisförmige Bewegung beim Verschwenken des Betätigungshebels (6) ausführt.

7. Haltesystem nach einem der vorhergehenden Ansprüche,
**dadurch gekennzeichnet,**
**dass** an der Grundplatte (2) eine Befestigungseinrichtung (23) oder eine Vibrationsentkopplungseinrichtung (22) und eine Befestigungseinrichtung (23) angeordnet sind.

8. Haltesystem nach Anspruch 7,
**dadurch gekennzeichnet,**
**dass** zwischen der Grundplatte (2) und der Befestigungseinrichtung (23) oder der Vibrationsentkopplungseinrichtung (22) noch eine Schwenkeinrichtung (25) zum Verschwenken des Halterungskörpers (1) um jeweils 90° derart vorgesehen ist, dass das Zusatzgerät (13) entweder im Hochformat oder im Querformat angeordnet ist.

## Claims

1. Holding system for fastening an electronic auxiliary device by means of a retaining body (1), wherein the perimeter of the retaining body (1) which is effective to receive the auxiliary device can be adjusted by means of a cam control having a cam disc (5), said cam control being controlled by an actuating lever (6) to be greater in an open position than in a closed position, and the retaining body (1) has a base plate (2), wherein, on the base plate (2), the actuating lever (6) and the cam disc (5) engaged with the actuating lever (6) are pivotably mounted and fixing elements (3) for the auxiliary device (13), which are held under tension by at least one resilient element (4), are displaceably arranged, and a pivoting of the actuating lever (6) brings the fixing elements (3) into the open position or into the closed position by means of the cam disc (5), **characterised in that** each fixing element (3) has, on its outside, at least one groove (12) for the insertion of the at least one resilient element (4).

2. Holding system according to claim 1, **characterised in that** each fixing element (3) has, on its inside, a groove (11), which is open toward the centre of the retaining body (1), for the insertion of a corner or an edge of the auxiliary device (13).

3. Holding system according to any one of the preceding claims, **characterised in that** each fixing element (3) has a slide shoe (10), which is displaceable in an elongate hole guide (9) of the base plate (2).

4. Holding system according to any one of the preceding claims, **characterised in that** the at least one resilient element (4) is a rubber cable.

5. Holding system according to any one of the preceding claims, **characterised in that** the cam disc (5) is arranged on the lower side of the base plate (2) and has a guide opening (18) in which a pin (19) arranged on the actuating lever (6) engages.

6. Holding system according to claim 5, **characterised in that** the cam disc (5), in the region of the guide opening (18), has two lateral stops (20) for the pin (19), the pin (19) being arranged on the actuating lever (6) in such a way that it carries out a part circle-like movement when the actuating lever (6) is pivoted.

7. Holding system according to any one of the preceding claims, **characterised in that** a fastening mechanism (23) or a vibration decoupling mechanism (22) and a fastening mechanism (23) are arranged on the base plate (2).

8. Holding system according to claim 7, **characterised in that** a pivoting mechanism (25) to pivot the retaining body (1) through 90° in each case is also provided between the base plate (2) and the fastening mechanism (23) or the vibration decoupling mechanism (22) in such a way that the auxiliary device (13) is either arranged in portrait format or in landscape format.

## Revendications

1. Système de maintien pour la fixation d'un accessoire électronique avec un corps de retenue (1), dans lequel le pourtour du corps de retenue (1) efficace pour le logement de l'accessoire peut être réglé, par l'intermédiaire d'une commande à came commandée par un levier d'actionnement (6) et pourvue d'une came (5), de manière à être plus grand dans une position ouverte que dans une position fermée et le corps de retenue (1) présente une plaque de base (2), le levier d'actionnement (6) et la came (5) en prise avec le levier d'actionnement (6) étant montés de manière pivotante sur la plaque de base (2) et des éléments de fixation (3) de l'accessoire (13) maintenus sous tension par au moins un élément élastique (4) étant disposés de manière coulissante et un pivotement du levier d'actionnement (6) amenant les éléments de fixation (3) dans la position ouverte ou dans la position fermée au moyen de la came (5),
**caractérisé en ce**
**que** chaque élément de fixation (3) présente sur son côté extérieur au moins une rainure (12) pour l'insertion dudit au moins un élément élastique (4).

2. Système de maintien selon la revendication 1,
**caractérisé en ce**
**que** chaque élément de fixation (3) présente sur son côté intérieur une rainure (11) ouverte en direction du centre du corps de retenue (1) pour l'insertion d'un coin ou d'un bord de l'accessoire (13).

3. Système de maintien selon une des revendications précédentes,
**caractérisé en ce**
**que** chaque élément de fixation (3) présente un coulisseau (10) qui peut coulisser dans un guide oblong (9) de la plaque de base (2).

4. Système de maintien selon une des revendications précédentes,
**caractérisé en ce**
**que** ledit au moins un élément élastique (4) est un câble élastique.

5. Système de maintien selon une des revendications précédentes,
**caractérisé en ce**
**que** la came (5) est disposée sous la face inférieure de la plaque de base (2) et présente une ouverture de guidage (18) dans laquelle s'engage une broche (19) disposée sur le levier d'actionnement (6).

6. Système de maintien selon la revendication 5,
**caractérisé en ce**
**que** la came (5) présente dans la zone de l'ouverture de guidage (18) deux butées latérales (20) pour la broche (19), la broche (19) étant disposée sur le levier d'actionnement (6) de manière à effectuer un mouvement circulaire partiel lors du pivotement du levier d'actionnement (6).

7. Système de maintien selon une des revendications précédentes,
**caractérisé en ce**
**qu'**un dispositif de fixation (23) ou un dispositif de découplage de vibrations (22) et un dispositif de fixation (23) sont disposés sur la plaque de base (2).

8. Système de maintien selon la revendication 7,
**caractérisé en ce**
**qu'**entre la plaque de base (2) et le dispositif de fixation (23) ou le dispositif de découplage de vibrations (22) est prévu un dispositif de pivotement (25) pour faire pivoter le corps de retenue (1) de 90° à chaque fois de manière à ce que l'accessoire (13) soit disposé soit en format vertical, soit en format horizontal.
